# EUROPEAN PATENT SPECIFICATION

(11) **EP 1 887 592 B1**
(45) Date of publication and mention of the grant of the patent: **07.01.2009**
(21) Application number: 06118588.0
(22) Date of filing: 08.08.2006
(51) Int. Cl.: H01G 9/20

(54) **InN/InP/TiO2 photosensitized electrode**
InN/InP/TiO2 photosensibilisierte Elektrode
Electrode photosensibilisée InN/InP/TiO2

(43) Date of publication of application: 13.02.2008
(73) Proprietor: Atomic Energy Council - Institute of Nuclear Energy Research, Lungtan, Taoyuan, Taiwan (TW)
(72) Inventor: Lin, Ming-Chang, Atlanta, GA GA 30307 (US); Tzeng, Yen-Chang, 234, Yonghe City, Taipei County (TW); Lan, Shan-Ming, 335, Daxi Town, Taoyuan County (TW); Lee, Chi-Shen, 300, Hsinchu City (TW); Yang, Tsun-Neng, 115, Taipei City (TW); Wei, Tsong-Yang, 114, Taipei City (TW); Chiu, Jyh-Perng, 269, Dongshan Shiang, Yilan County (TW); Lin, Li-Fu, 333, CHIAAN VILLAGE, LUNGTAN, TAOYUAN (TW); Shieh, Der-Jhy, Atomic Energy Council, Chiaan Village, Lungtan Township, Taoyuan 32546 (TW); Kuo, Ming-Chao, 300, Hsinchu City (TW)
(74) Representative: Beck, Michael Rudolf

(56) References cited:
- US-A1- 2006 165 404
- WANG J H ET AL: "Low-Pressure Organometallic Chemical Vapor Deposition of Indium Nitride on Titanium Dioxide Nanoparticles" CHEMPHYSCHEM - A EUROPEAN JOURNAL OF CHEMICAL PHYSICS & PHYSICAL CHEMISTRY, WILEY VCH, WEINHEIM, DE, vol. 5, 14 October 2004 (2004-10-14), pages 1615-1618, XP007901454 ISSN: 1439-4235

## Description

### Field of the invention

The present invention relates to an photosensitized electrode; more particularly, it relates to obtaining a photosensitized electrode having an indium phosphide (InP) photosensitive layer and an indium nitride (InN) photosensitive layer to be applied in a solar cell device, an optoelectronic device or a hydrogen generator device.

### Description of the Related Art

During recent years, a nano-crystal film technology is utilized in a Dye-Sensitized Solar Cell (DSSC) so that the efficiency of photoelectrical transformation has gained a great improvement along with a cheap cost. Hence, the cost for a solar cell may quite possibly drop for about 1/10 to 1/5. The former DSSC basically uses smooth electrode; and its dye molecule layer (such as a ruthenium ligand series, a cyanine, a chlorophyll or a dye derived) transforms electric charge effectively only at a monolayer close to the semiconductor. Because a smooth electrode has small area for absorption with little absorbing ability, its photoelectrical transformation ability is low (less than 1%). Recently, a porous nano-structured electrode is introduced for solving this problem. Because the surface area of the catalyst is thousands times of that of the smooth electrode, the photoelectrical transformation ability is greatly improved. According to Michael Graetzel's research, the photoelectrical transformation efficiency of the DSSC is notably improved to 8%.

The efficiency of DSSC obviously relies on its nano electrode structure of titanium oxide (TiO₂). Therefore, on fabricating the TiO₂, the shape, the arrangement and the interface characteristic of nano-crystal has to be well-controlled. The inner surface area of the TiO₂ decides how much dye will be kept; the distribution of the holes affects the spreading of the redox pairs; the distribution of the granular size affects its optical characteristics; and the electron flow determines the connection between the particles. Nowadays, a TiO₂ electrode has an electron transferring rate of 10⁻⁴cm²/s; so the electrons are easy to be re-combined to the dye for a reaction.

Under a best experimental environment with a best dye, Graetzel, etc. make the transformation efficiency arrive at 10% which is quite close to that of a non-crystal system of 9%-10%; yet still worse than that of the multi-crystal system of 15%. And, as what is noteworthy, the costs for an organic dye/TiO₂ and a multi-crystal system are so high that their costs are still uncompetitive to that of petroleum fuel, like oil or gas.

US 2006/0165404 A1 discloses a photoreceptive layer comprising a metal oxide, a first dye formed on the surface of the metal oxide, and a second dye formed on another surface of the metal oxide via a special compound Sid compound comprises a first functional group binding with said metal oxide, another functional group binding with the second dye and a bond carbon based bond binding said functional groups. One example for the first dye is a ruthenium complex while the metal oxide is said to be TiO₂, SnO₂), ZnO, WO₃ Nb₂O₅, TiSrO₃ or a mixture thereof.

Further, Jeng-Han Wang and M. C. Lin disclose in "Low-Pressure Organometallic Chemical Vapor Deposition of Indium Nitride on Titanium Dioxide Nanoparticles", ChemPhysChem 2004, vol. 5, pages 1615-1618, the deposition of high-quality In N films onto TiO₂ nanoparticles using TMIn and HN₃ by low-pressure organometallic chemical vapor deposition in connection with dye sensitized photovoltaic solar cells. In N films were directly grown over TiO₂ nanoparticle films in an oilfree high-vacuum chamber.

Although the above DSSC has a great improvement in transformation ability, the cost is high and the fabricating procedure is complex that some elements in the environment has to be controlled, such as the granular size of the TiO₂ and the distribution of the particles. Besides, after being shone under the sun for a long time, the material may have a qualitative change to lose its photosensitivity with lifetime shortened. Hence, the prior art does not fulfill users' requests on actual use.

### Summary of the invention

The main purpose of the present invention is to fabricating a photosensitized electrode with low cost and with long lifetime to be applied in a solar cell device having enhanced absorbing ability.

To achieve the above purpose, the present invention provides an InN/InP/TiO₂ photosensitized electrode according to claim 1 and a method of fabricating same according to claim 10. Advantageous embodiments are laid down in further claims.

The In N/InP/TiO₂ photosensitized electrode, comprises a substrate, a TiO₂ film and a photosensitive layer consisting of an InP photosensitive layer and an InN photosensitive layer, where a fabricating method for the photosensitized electrode comprises placing a substrate, coated with a TiO₂ film, in a reaction chamber; pasting the TiO₂ film with an InP solution having nanoparticles to obtain an InP photosensitive layer; introducing hydrazoic acid (HN₃) and a compound containing indium into the reaction chamber; illuminating the InP photosensitive layer with an ultraviolet light; and obtaining an InN photosensitive layer on the InP photosensitive layer.

### Brief descriptions of the drawings

The present invention will be better understood from the following detailed description of the preferred embodiment according to the present invention, taken in conjunction with the accompanying drawings, in which
FIG.1 is a structural view showing a preferred embodiment according to the present invention;
FIG.2 is a flow view showing the fabricating of the photosensitized electrode;
FIG.2A, FIG.2B, FIG.2C, FIG.2D and FIG.2E are views showing step (a), step (b), step (c), step (d), and step(e) of the fabricating of the photosensitized electrode respectively; and
FIG.3 is a view showing a state of use of the electrode.

### Description of the preferred embodiment

The following description of the preferred embodiment is provided to understand the features and the structures of the present invention.

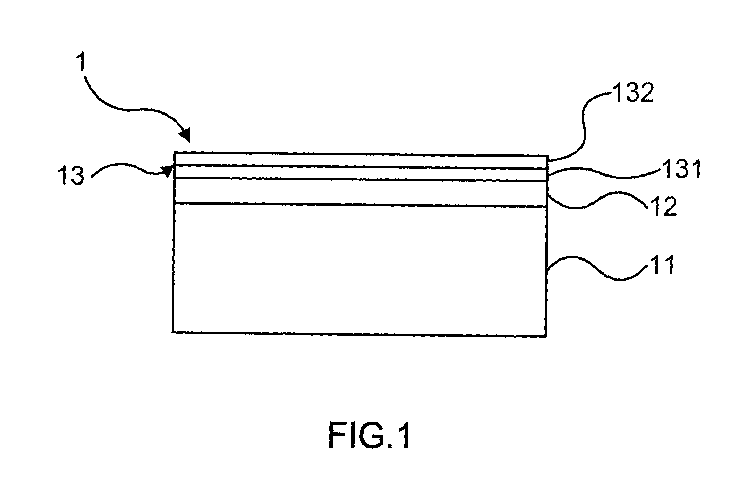

Please refer to FIG.1, which is a structural view showing a preferred embodiment according to the present invention. As shown in the figure, the present invention is an InN_(indium nitride)/InP_(indium phosphide)/TiO₂ (titanium oxide) photosensitized electrode 1, comprising a substrate 11, a TiO₂ film 12 and a photosensitive layer 13.

The substrate 11 is an indium tin oxide (ITO) glass, an fluorine tin oxide (FTO) glass or other transparent conductive substrate.

The TiO₂ film 12 is covered on the substrate 11. The TiO₂ film 12 has a nanoparticle structure, where a plurality of nanoparticles are evenly distributed in the TiO₂ film 12, and where each nanoparticle has a diameter between 7nm (nanometer) and 50nm. The TiO₂ film 12 has a thickness between 100nm and 100000nm and is made of a metal oxide **having a high band-gap.**

The photosensitive layer 13 comprises an InP photosensitive layer 131 and an InN photosensitive layer 132. The InP photosensitive layer 131 and the InN photosensitive layer 132 are made through a chemical vapor deposition (CVD), a physical vapor deposition (PVD) or other epitaxial film growth method. The InP photosensitive layer 131 is coated on the TiO₂ film 12 and the InN photosensitive layer 132 is coated on the InP photosensitive layer 131. The InP photosensitive layer 131 and the InN photosensitive layer 132 both have a thickness between 1nm and 10000nm. Thus, with the above structure, a novel photosensitized electrode is obtained.

When a light penetrates through the substrate 11 of the photosensitized electrode 1 into the photosensitive layer 13, an electron is injected into the TiO₂ film 12 from the photosensitive layer 13 and then the electron is conducted to an outside circuit from the substrate, where the photosensitive layer 13 absorbs an optical wavelength between 390nm and 600nm and an optical bandwidth between 390nm and 800nm.

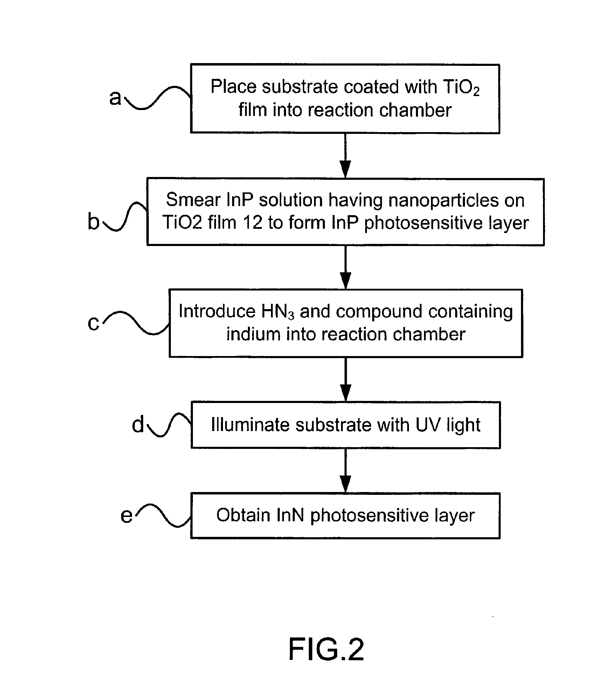

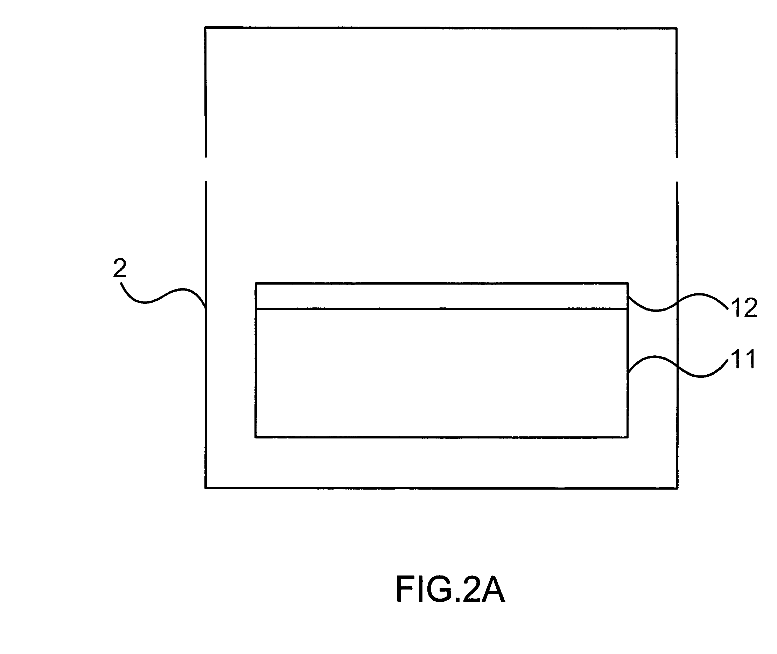

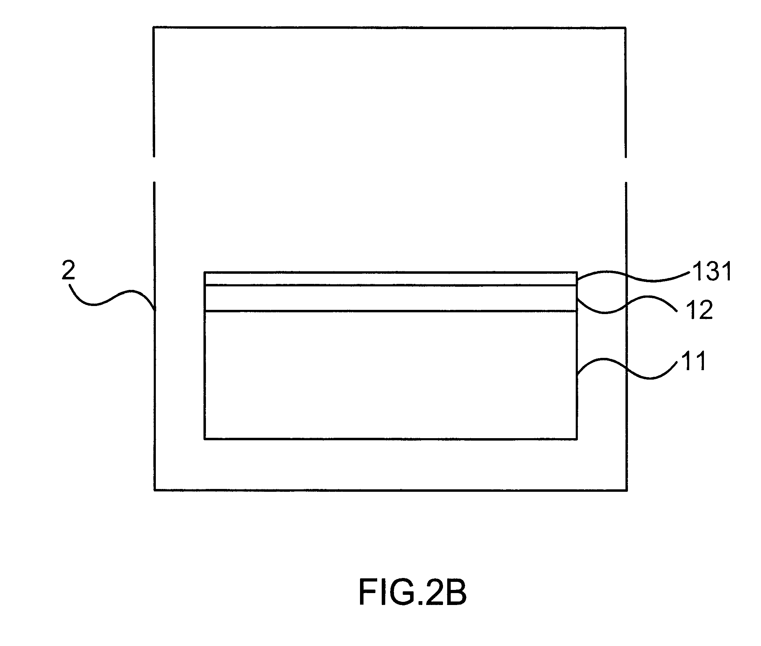

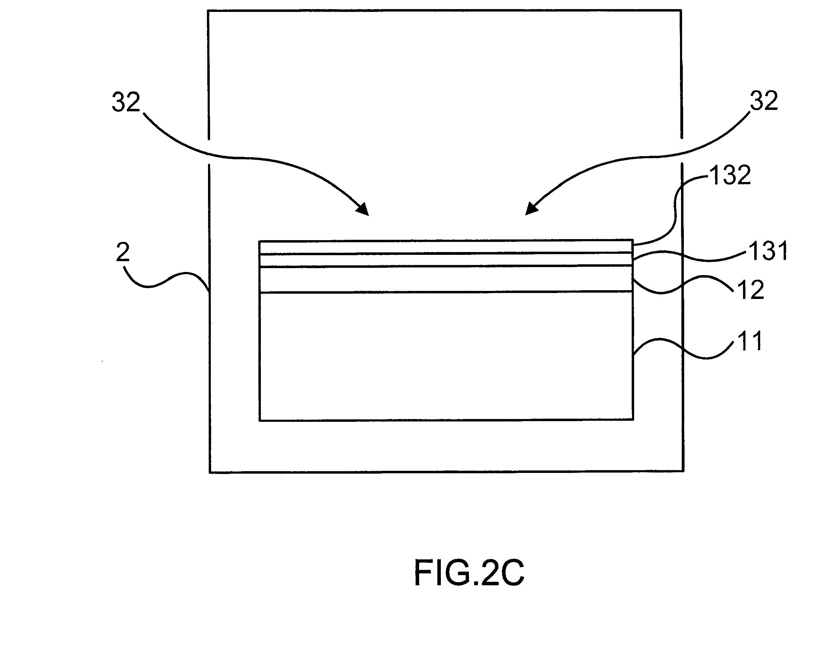

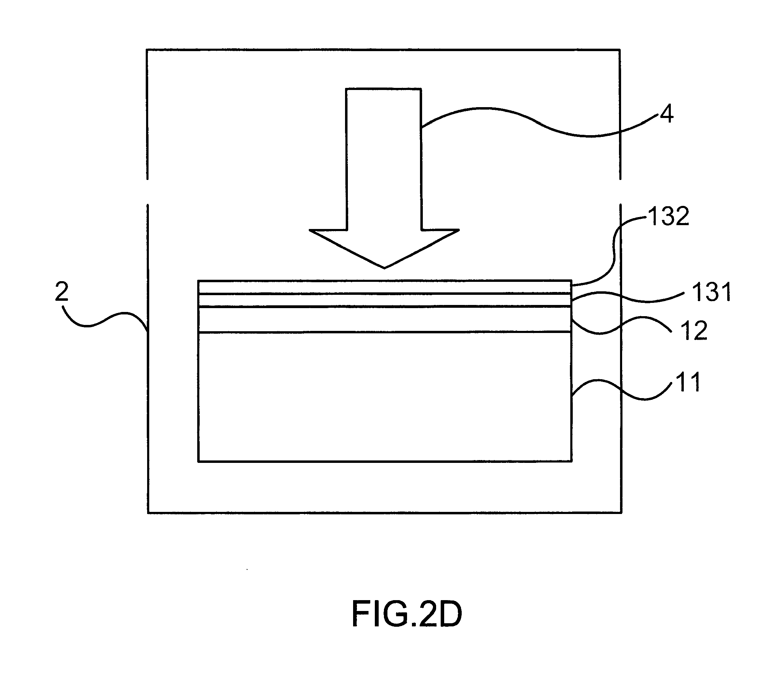

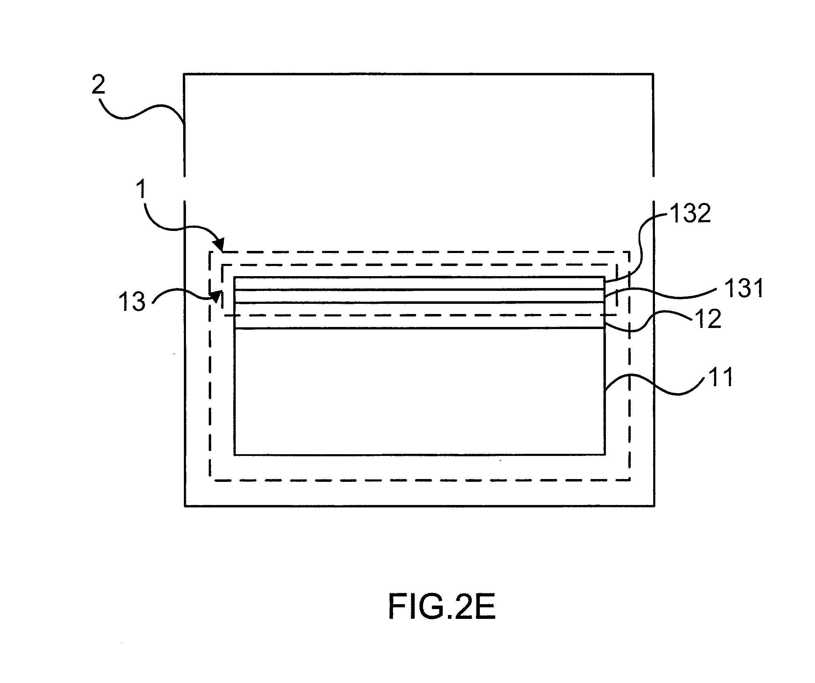

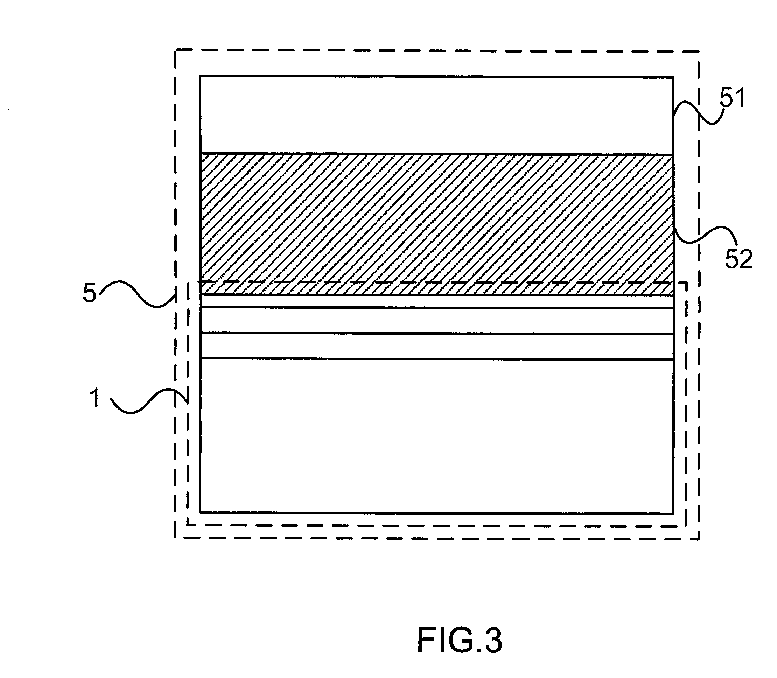

Please refer to FIG.2 and FIG.2A until FIG.2E, which are a flow view showing the fabricating of the photosensitized electrode and views showing step (a) until step (e) of the fabricating of the photosensitized electrode. As shown in the figures, the fabricating of the photosensitized electrode according to the present invention comprises the following steps:
Step (a): A substrate 11 coated with a TiO₂ film 12 is placed into a reaction chamber 2, where the TiO₂ film 12 is coated on the substrate 11 through a CVD or a PCD.
Step (b): An InP solution having nanoparticles is pasted on the TiO₂ film 12 to form an InP photosensitive layer 131, where the InP solution has nanoparticles and can be replaced with a compound containing phosphorus and a compound containing indium.
Step (c): A hydrazoic acid (HN₃) 31 and a compound containing indium 32 is introduced into the reaction chamber 2, where the ratio of HN₃ 31 to the compound containing indium 32 is between 1 and 10. The compound containing indium 32 is a trimethylindium, a triethylindium, an indium-containing metallo-organic precursor or a combination of indium-containing metallo-organic precursors. The present invention uses the HN₃ 31 and the compound containing indium 32 as precursors; and the HN₃ 31 can be replaced with a compound containing nitrogen.
Step (d): The substrate 11is then illuminated with an ultraviolet (UV) light, where the UV light is obtained from a continuous UV lamp, an excimer laser, a semiconductor laser, a gas laser, a solid-state laser, a liquid laser, a chemical laser or a free-electron laser, and where the TiO₂ film 12 bears a temperature between 600°C (Celsius degree) and 900°C.
Step (e): An InN photosensitive layer 132 is obtained on the InP photosensitive layer 131 so that the InP photosensitive layer 131 and the InN photosensitive layer 132 are obtained to form a photosensitive layer 13. Thus, a photosensitized electrode 13 is obtained, where the total process time is between 1hr and 8hrs.
Please refer to FIG.3, which is a view showing a state of use of the electrode. As shown in the figure, the photosensitized electrode 1 according to the present invention is assembled with a platinum counter electrode 51 to form a solar cell device filled with an electrolyte 52 inside. The present invention can be applied to a solar cell device, a photovoltaic device, a hydrogen generation devices and an optoelectronic device.

To sum up, the present invention is an InN/InP/TiO₂ photosensitized electrode, where a lifetime issue of the dye for a Dye-Sensitized Solar Cell (DSSC) is solved; optical absorption efficiency is enhanced; a production procedure is simplified; and a production cost is reduced.

The preferred embodiment herein disclosed is not intended to unnecessarily limit the scope of the invention. Therefore, simple modifications or variations belonging to the scope of the claims are all within the scope of the present invention.

## Claims

1. An InN_(indium nitride)/InP_(indium phosphide)/TiO₂ (titanium oxide) photosensitized electrode, comprising:
a substrate (11);
a TiO₂ film (12) said TiO₂ film covering on said substrate (11); and
a photosensitive layer (13), said photosensitive layer comprising an InP photosensitive layer (131) and an InN photosensitive layer(132), said InP photosensitive layer (131) coating on said TiO₂ film (12), said InN photosensitive layer (132) coating on said InP photosensitive layer (131).

2. The photosensitized electrode according to claim 1, wherein said substrate (11) is a transparent conductive substrate selected from a group consisting of an indium tin oxide (ITO) glass and a fluorine tin oxide (FTO) glass.

3. The photosensitized electrode according to claim 1 or 2, wherein said TiO₂ film (12) has a nanoparticle structure.

4. The photosensitized electrode according to claim 3, wherein said nanoparticle structure comprises a plurality of nanoparticles wherein each nanoparticle has a diameter between 7nm (nanometer) and 50nm.

5. The photosensitized electrode according to one of claims 1 to 4, wherein said TiO₂ film (12) has a thickness between 100nm and 100000nm.

6. The photosensitized electrode according to one of claims 1 to 5, wherein said InP photosensitive layer (131) has a thickness between 1nm and 10000nm.

7. The photosensitized electrode according to one of claims 1 to 6, wherein said InN photosensitive layer (132) has a thickness between 1nm and 10000nm.

8. The photosensitized electrode according to one of claims 1 to 7, wherein said photosensitive layer (13) comprising said InP photosensitive layer (131) and said InN photosensitive layer (132) absorbs light having a wavelength between 390nm and 600nm.

9. The photosensitized electrode according to one of claims 1 to 8, wherein said photosensitive layer (13) comprising said InP photosensitive layer (131) and said InN photosensitive layer (132) absorbs light having an optical bandwidth between 390nm and 800nm.

10. A method of fabricating the photosensitized electrode of claim 1, said method comprising steps of:
a. placing a substrate (11) in a reaction chamber, said substrate coated with a TiO₂ film (12);
b. pasting said TiO₂ film (12) with an InP solution having nanoparticles to obtain an InP photosensitive layer(131);
c. introducing hydrazoic acid (HN₃) and a compound containing indium into said reaction chamber;
d. illuminating said InP photosensitive layer (131) with an ultraviolet (UV) light; and
e. obtaining an InN photosensitive layer (132) coated on said InP photosensitive layer (131).

11. The method according to claim 10, wherein said compound containing indium is selected from a group consisting of a trimethylindium, a triethylindium, a indium-containing metallo-organic precursor and a combination of indium-containing metallo-organic precursors.

12. The method according to claim 10 or 11, wherein said hydrazoic acid is a compound containing indium.

13. The method according to one of claims 10 to 12, wherein a ratio of said HN3 to said compound containing indium is between 1 and 10.

14. The method according to one of claims 10 to 13, wherein said Ti02 film (12) bears a temperature between 600°C (Celsius degrees) and 900°C.

15. The method according to one of claims 10 to 14, wherein a period of time for processing all steps of said step (a) until step (e) is between 1hr (hour) and 8hrs.

16. The method according to one of claims 10 to 15, wherein said UV light is obtained from a light source selected from a group consisting of a continuous UV lamp, an excimer laser, a semiconductor laser, a gas laser, a solid-state laser, a liquid laser, a chemical laser and a free-electron laser.

## Patentansprüche

1. InN (Indiumnitrid)/InP (Indiumphosphid)/TiO₂, (Titanoxid)-photosensibilisierte Elektrode, umfassend:
ein Substrat (11);
eine TiO₂-Schicht (12), wobei die TiO₂-Schicht das Substrat (11) bedeckt; und
eine photoempfindliche Schicht (13), wobei die photoempfindliche Schicht eine photoempfindliche InP-Schicht (131) und eine photoempfindliche InN-Schicht (132) umfasst, wobei die photoempfindliche InP-Schicht (131) auf der TiO₂-Schicht (12) aufgebracht ist, und die photoempfindliche InN-Schicht (312) auf der photoempfindlichen InP-Schicht (131) aufgebracht ist.

2. Photosensibilisierte Elektrode nach Anspruch 1, wobei das Substrat (11) ein transparentes, leitendes Substrat ist, das aus einer Gruppe ausgewählt wird, die aus einem Indiumoxid (ITO)-Glas und einem Fluor-Zinn-Oxid (FTO)-Glas besteht.

3. Photosensibilisierte Elektrode nach Anspruch 1 oder 2, wobei die TiO₂-Schicht (12) eine Nanopartikel-Struktur aufweist.

4. Photosensibilisierte Elektrode nach Anspruch 3, wobei die Nanopartikel-Struktur eine Vielzahl von Nanopartikeln umfasst, wobei jedes Nanopartikel einen Durchmesser zwischen 7 nm (Nanometer) und 50 nm aufweist.

5. Photosensibilisierte Elektrode nach einem der Ansprüche 1 bis 4, wobei die TiO₂-Schicht(12) eine Dicke zwischen 100 nm und 100000 nm aufweist.

6. Photosensibilisierte Elektrode nach einem der Ansprüche 1 bis 5, wobei die photoempfindliche InP-Schicht (131) eine Dicke zwischen 1 nm und 10000 nm aufweist.

7. Photosensibilisierte Elektrode nach einem der Ansprüche 1 bis 6, wobei die photoempfindliche InN-Schicht (132) eine Dicke zwischen 1 nm und 10000 nm aufweist.

8. Photosensibilisierte Elektrode nach einem der Ansprüche 1 bis 7, wobei die photoempfindliche Schicht (13), welche die photoempfindliche InP-Schicht (131) und die photoempfindliche InN-Schicht (132) umfasst, Licht mit einer Wellenlänge zwischen 390 nm und 600 nm absorbiert.

9. Photosensibilisierte Elektrode nach einem der Ansprüche 1 bis 8, wobei die photoempfindliche Schicht (13), welche die photoempfindliche InP-Schicht (131) und die photoempfindliche InN-Schicht (132) umfasst, Licht mit einer optischen Bandbreite zwischen 390 nm und 800 nm absorbiert.

10. Verfahren zum Herstellen der photosensibilisierten Elektrode nach Anspruch 1, wobei das Verfahren die Schritte umfasst:
a. Platzieren eines Substrats (11) in einer Reaktionskammer, wobei das Substrat mit einer TiO₂-chicht (12) beschichtet ist;
b. Einstreichen der TiO₂-Schicht (12) mit einer InP-Lösung, die Nanopartikel aufweist, um eine photoempfindliche InP-Schicht (131) zu erhalten;
c. Einführen von Stickstoffwasserstoffsäure (HN₃) und einer Verbindung, die Indium enthält, in die Reaktionskammer;
d. Beleuchten der photoempfindlichen InP-Schichit (131) mit einem ultravioletten (UV)-Licht; und
e. Erhalten einer photoempfindlichen InN-Schicht (132), die auf die photoempfindliche InP-Schicht (131) aufgebracht ist.

11. Verfahren nach Anspruch 10, wobei die Verbindung, die Indium enthält, aus einer Gruppe ausgewählt wird, die aus Trimethylindium, Triethylindium, einem Indium enthaltenden metallorganischen Percursor und einer Kombination aus Indium enthaltenden Percursoren besteht.

12. Verfahren nach Anspruch 10 oder 11, wobei die Stickstoffwasserstoffsäure eine Verbindung ist, die Indium enthält.

13. Verfahren nach einem der Ansprüche 10 bis 12, wobei ein Verhältnis der HN₃ zu der Indium enthaltenden Verbindung zwischen 1 und 10 liegt.

14. Verfahren nach einem der Ansprüche 10 bis 13, wobei die TiO₂-Schicht (12) eine Temperatur zwischen 600°C (Grad Celsius) und 900°C aushält.

15. Verfahren nach einem der Ansprüche 10 bis 14, wobei eine Zeitdauer zum Ausführen aller Schritte von Schritt (a) bis Schritt (e) zwischen 1 Std. (Stunde) und 8 Std. liegt.

16. Verfahren nach einem der Ansprüche 10 bis 15, wobei das UV-Licht von einer Lichtquelle stammt, die aus einer Gruppe ausgewählt wird, die aus einer kontinuierlichen UV-Lampe, einem Excimer-Laser, einem Halbleiterlaser, einem Gaslaser, einem Festkörperlaser, einem Flüssigkeitslaser, einem chemischen Laser und einem Freie-Eletronen-Laser besteht.

## Revendications

1. électrode photosensibilisée au InN (nitrure d'indium) /InP (phosphure de d'indium)/ TiO₂ (oxyde de titane) comprenant :
un substrat (11) ;
une pellicule de TiO₂ (12), ladite pellicule couvrant ledit substrat (11) et
une couche photosensible (13), ladite couche photosensible comprenant une couche photosensible d'InP (131) et une couche photosensible d'InN (132), ladite couche photosensible d'InP (131) couvrant ladite pellicule de TiO₂ (12), ladite couche photosensible d'InN (132) couvrant ladite couche photosensible d'InP (131).

2. Electrode photosensibilisée selon la revendication 1 dans laquelle ledit substrat (11) est un substrat conducteur transparent sélectionné dans le groupe comprenant le verre d'indium dopé à l'étain (ITO) et le verre d'étain dopé au fluor (PTO).

3. Electrode photosensibilisée selon la revendication 1 ou 2 dans laquelle ladite pellicule de TiO₂ (12) a une structure de nanoparticules.

4. Electrode photosensibilisée selon la revendication 3 dans laquelle la structure de nanoparticules comprend une pluralité de nanoparticules dans laquelle chaque nanoparticule a un diamètre entre 7 nm (nanomètres) et 50 nm.

5. Electrode photosensibilisée selon l'une des revendications 1 à 4 dans laquelle ladite pellicule de TiO₂ (12) a une épaisseur entre 100 nm et 100000 nm.

6. Electrode photosensibilisée selon l'une des revendications 1 à 5 dans laquelle ladite couche photosensible d'InP (131) a une épaisseur entre 1 nm et 10000 nm.

7. Electrode photosensibilisée selon l'une des revendications 1 à 6 dans laquelle ladite couche photosensible d'InN (132) a une épaisseur entre 1 nm et 10000 nm.

8. Electrode photosensibilisée selon l'une des revendications 1 à 7 dans laquelle ladite couche photosensible (13) comprend ladite couche photosensible d'InP (131) et ladite couche photosensible d'InN (132) absorbe la lumière qui a une longueur d'onde entre 390 nm et 600 nm.

9. Electrode photosensibilisée selon l'une des revendications 1 à 8 dans laquelle ladite couche photosensible (13) comprend ladite couche photosensible d'InP (131) et ladite couche photosensible d'InN (132) absorbe la lumière qui a une largeur de bande optique entre 390 nm et 800 nm.

10. Procédé de fabrication de l'électrode photosensibilisée selon la revendication 1, ledit procédé comprenant les étapes de :
a. placement d'un substrat (11) dans une chambre de réaction, ledit substrat étant enduit d'une pellicule de TiO₂ (12) ;
b. collage de ladite pellicule de TiO₂ (12) avec une solution d'InP ayant des nanoparticules pour obtenir une couche photosensible d'InP (131);
c. introduction d'acide hydroazoïque (HN3) et un composé contenant de l'indium dans ladite chambre de réaction ;
d. éclairage de ladite couche photosensible d'InP (131) avec une lumière ultraviolette et
e. obtention d'une couche photosensible d'InN (132) enduite sur ladite couche photosensible d'InP (131).

11. Procédé selon la revendication 10 dans lequel ledit composé contenant de l'indium est sélectionné dans un groupe comprenant un triméthylindium, un triéthylindium, un précurseur organométallique contenant de l'indium et une combinaison de précurseurs organométalliques contenant de l'indium.

12. Procédé selon la revendication 10 ou 11 dans lequel ledit acide hydroazoïque est un composé contenant de l'indium.

13. Procédé selon l'une des revendications 10 à 12 dans lequel le rapport du HN3 au composé cité contenant de l'indium est entre 1 et 10.

14. Procédé selon l'une des revendications 10 à 13 dans lequel ladite pellicule de TiO₂ (12) supporte une température entre 600 °C (degrés Celsius) et 900 °C.

15. Procédé selon l'une des revendications 10 à 14 dans lequel une période de temps pour effectuer toutes les étapes de ladite étape (1) à l'étape (e) est entre 1 heure et 8 heures.

16. Procédé selon l'une des revendications 10 à 15 dans lequel ladite lumière ultraviolette est obtenue par une source de lumière sélectionnée dans un groupe comprenant une lampe ultraviolette continue, un laser excimeur, un laser semiconducteur, un laser à gaz, un laser à corps solide, un laser liquide, un laser chimique et un laser à électrons libres,
